(19) Europäisches Patentamt
European Patent Office
Office européen des brevets

(11) **EP 3 424 460 B1**

## (12) EUROPEAN PATENT SPECIFICATION

(45) Date of publication and mention
of the grant of the patent:
**11.12.2019 Bulletin 2019/50**

(51) Int Cl.:
***A61C 8/00*** *(2006.01)*

(21) Application number: **18181273.6**

(22) Date of filing: **02.07.2018**

(54) **IMPLANT ABUTMENT**

**IMPLANTATAUFBAU**

**PILIER IMPLANTAIRE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.07.2017 IT 201700075110**

(43) Date of publication of application:
**09.01.2019 Bulletin 2019/02**

(73) Proprietor: **Biosaf In S.R.L.**
**20060 Trezzano Rosa (MI) (IT)**

(72) Inventor: **BAMBINI, FABRIZIO**
**60019 SENIGALLIA (AN) (IT)**

(74) Representative: **Baldi, Claudio**
**Ing. Claudio Baldi S.r.l.**
**Viale Cavallotti, 13**
**60035 Jesi (Ancona) (IT)**

(56) References cited:
**WO-A1-2014/090358     KR-B1- 100 788 455
US-A1- 2010 248 187     US-A1- 2011 200 969**

**Description**

The present patent application for industrial invention relates to an implant abutment, in particular for dental implants.

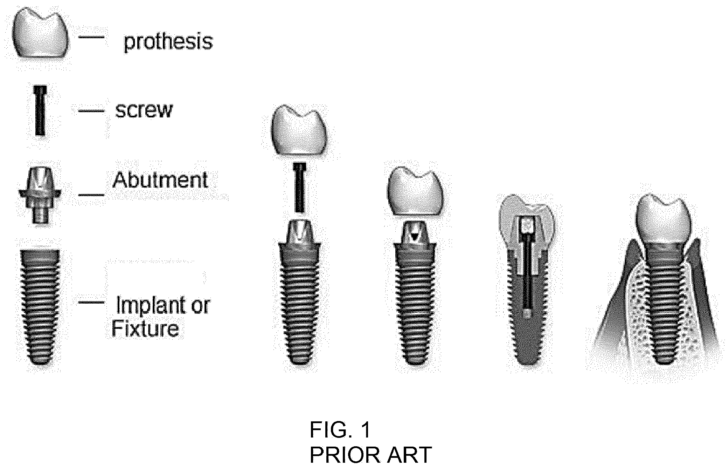

With reference to Fig. 1 a dental prosthesis comprises:

- a fixture composed of a threaded screw that is screwed into the bone;
- an abutment fixed to the fixture by means of screwing and/or conical coupling with fixing screw; and
- a dental prosthesis fixed to the abutment according to the prior art.

Implantation is a very popular therapeutic technique that is based on the principle of osteointegration. The high level of predictability and success of the existing implant therapies has resulted in the evolution of the surgical and prosthetic protocols. The long-term maintenance of the osteointegration of the implant is mostly affected by the peri-implant bone density and by the conditions of the peri-implant mucosa. In fact the maintenance of the crestal bone is a critical success factor in the long run. The tissues that surround the implant are: the epithelium, the connective and the bone and they all play a role in maintaining the function of the dental implant. Several studies have been made on the influence of the implant surface on bone healing, whereas the investigations on the influence of the neck of the implant or of the prosthetic components on the soft tissues are not equally numerous.

After achieving osteointegration, it is necessary to have healthy gingival tissues and a good mucosal seal to protect the underlying bone tissue. It is absolutely necessary to know the behavior of the peri-implant soft tissues in order to ensure the long term success of the implant-prosthetic treatment.

The peri-implant mucosal tissues are composed of the nonkeratinized sulcular epithelium, the junctional epithelium and the connective tissue. The junctional epithelium is composed of the part of mucosal tissues that establishes a relation with the implant basically in the same way as in natural teeth; the epithelium emits the hemidesmosomes with the metal surface.

The connective tissue has a different relation with the implant compared to natural teeth; the connective fibers are inserted in the cement of the natural teeth and in the bone, whereas around the implants the connective fibers have a perpendicular direction and then become parallel to the surface of the implant.

After being connected to the oral cavity by means of a loaded abutment or a healing screw, the implant undergoes crestal and apical bone rearrangement, i.e. bone corticalization in the central/apical portion and crestal reabsorption. The increase of bone density is clear and is determined by the capability of the bone to adjust to the load requirements, meaning that within certain limits the peri-implant bone density is always in direct proportion to the load, just like it occurs in the other areas of the human skeleton. The reasons that determine crestal reabsorption have been largely discussed, and two hypotheses have been made:

- a first hypothesis considers the load as cause of the crestal reabsorption;
- a second hypothesis considers the presence of bacteria in the microgap between implant and abutment.

An issue against the first hypothesis is represented by the fact that also unloaded implants will suffer the same bone rearrangement as loaded implants.

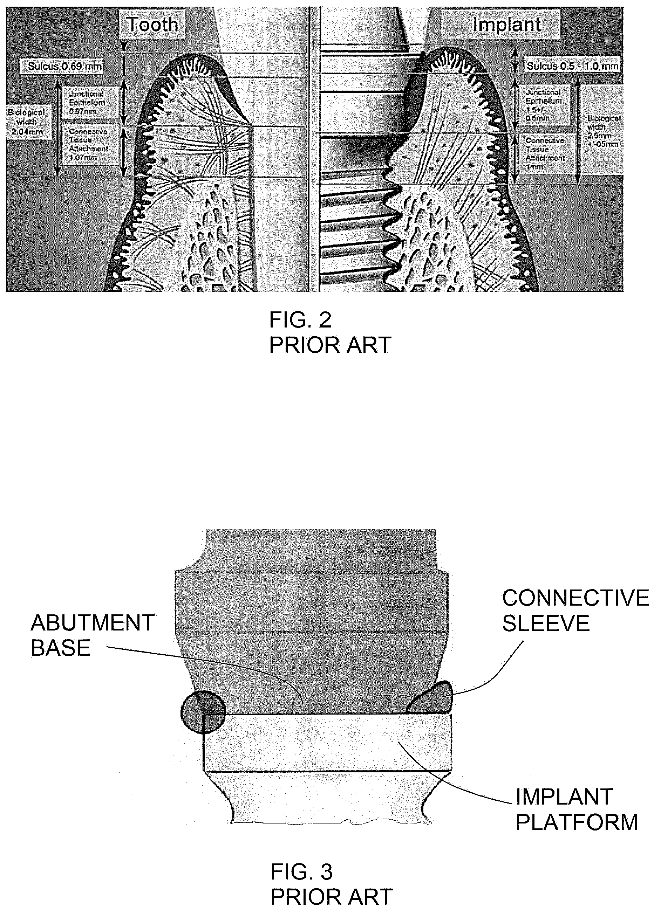

It was initially thought that the gingival tissues establish a mucosal seal at the level of the smooth surface of the abutment in the submerged technique or of the smooth neck of the implant in the non-submerged technique. As a matter of fact, investigations have shown that the implant undergoes the reabsorption of the crestal bone tissue also when it is not subject to a load. In 1997 Cochran et al. carried out an investigation on the width of the mucosal tissues around loaded and unloaded implants. Their conclusion was that, regardless of the load, a stable "biological width" is established around the implants, which is identical to what occurs in natural teeth. Fig. 2 shows the biological width in a natural tooth and in an implant.

Therefore, data indicates that even unloaded implants that are simply exposed to the oral environment would face the same rearrangements of the crestal bone.

In a study made on Beagle dogs, in 1996 Berglundh and Coll. demonstrated that, after being subject to a functional load, the implant had a thickness of soft tissues that divided the implant from the oral cavity. The peri-implant soft tissues have the same anatomy as the soft tissues around a natural tooth and represent the so-called "biological width" described in paradontology. The peri-implant soft tissues also have a very similar arrangement to the one around a natural tooth, with some differences: absence of periodontal space and, consequently, the vessels would derive exclusively from the bone and periosteal structures; the peri-implant connective tissues are not organized as a real connective attachment and they run parallel to the surface as thickened circular beams able to form a robust sleeve around the implant.

With reference to Fig. 3, recent studies suppose the formation of a more consistent connective sleeve when the base of the abutment is reduced compared to the implant platform, with advantages in the capability of forming a mucosal seal. In this case a technique known as "platform switching" is used, according to which the abutment is moved laterally relative to the implant, in such a way as to move the abutment away from the bone crest, reducing the reabsorption level of the bone crest.

Therefore, if the surgical procedures are respected in order not to contaminate and not to overheat the bone, and if the implants are inserted achieving primary stability, osteointegration is a predictable result. The variable that considerably affects the long-term success of the implant-prosthetic treatment is the level of peri-implant crestal reabsorption. The level of peri-implant crestal reabsorption can be minimized with some measures that can improve the prognosis of the operation.

US2010/248187 discloses a dental abutment provided with a body comprising a plurality of ring-shaped projections that are alternated to a plurality of grooves; the projections can be equidistant.

US2011/200969 discloses an abutment provided with a body comprising a plurality of ring-shaped ribs and grooves. The ribs can be equidistant and have rounded corners.

WO2014/090358 discloses an abutment comprising two rings and one groove between the two rings. The two rings and the groove have a semicircular shape and have the same height and the same radius of curvature.

The projections of the abutments disclosed in US2010/248187 and in US2011/200969 have a shape that does not maximize the contact surface between the abutment and the gingiva. Being provided with only two projections, also the abutment disclosed in WO2014/090358 is not able to maximize the contact surface between the abutment and the gingiva. Therefore, the abutments disclosed in US2010/248187, US2011/200969 and WO2014/090358 are impaired by the risk of not being firmly anchored to the gingiva.

EP2486890 discloses an abutment with ribs and grooves suitable for being disposed inside a fixture in order to fix the abutment to the fixture.

The purpose of the present invention is to eliminate the drawbacks of the prior art by providing a implant abutment with a suitable shape in order to maximize the surface in contact with the gingiva, in such a way to obtain a correct aesthetic and functional integration of the implant and avoid peri-implant crestal bone reabsorption.

Another purpose of the present invention is to provide such an abutment that is capable of improving the stability of the peri-implant tissues.

Another purpose of the present invention is to provide such an abutment that is suitable for guaranteeing a biological width similar to the one of a natural tooth.

Another purpose of the present invention is to provide such an abutment that is suitable for permitting the immediate load of the implant for an improved aesthetics and function and easier rehabilitation of the implant.

These purposes are achieved according to the invention with the characteristics of the independent claim 1.

Advantageous embodiments of the invention appear from the dependent claims.

The abutment of the invention is defined by claim 1.

The shape of the body of the abutment according to the present invention has been studied to increase the space available for the soft tissues in order to guarantee a sufficient biological width, obtain a correct aesthetic and functional integration of the implant and avoid the peri-implant crestal bone reabsorption.

Additional features of the invention will appear clearer from the detailed description below, which refers to merely illustrative, not limiting embodiments, wherein:

Fig. 1 is a diagrammatic view of the various assembly steps of a dental implant according to the prior art;
Fig. 2 is a diagrammatic view of the biological width in the case of a natural tooth and of an implant according to the prior art;
Fig. 3 is a partially interrupted side view of an abutment mounted on an implant with platform switching technique;
Figs. 4, 5, 6 are respectively a side view, an axial sectional view and a top view of an abutment according to a first embodiment of the invention;
Fig. 4A is an enlarged view of a detail of Fig. 4;
Figs. 7 and 8 are an exploded side view and an exploded axial sectional view of two elements of an abutment according to a second embodiment of the invention;
Figs. 9 and 10 are an exploded side view and an exploded axial sectional view of two elements of an abutment according to a third embodiment of the invention;
Figs. 11 and 12 are an exploded side view and an exploded axial sectional view of two elements of an abutment according to a fourth embodiment of the invention;
Figs. 13 and 14 are an exploded side view and an exploded axial sectional view of three elements of an abutment according to a fifth embodiment of the invention;
Fig. 15 is a side view of the abutment according to the invention fixed to an implant; and
Fig. 16 is the same view as Fig. 15, which shows the implant and the abutment according to the invention, disposed inside an oral cavity.

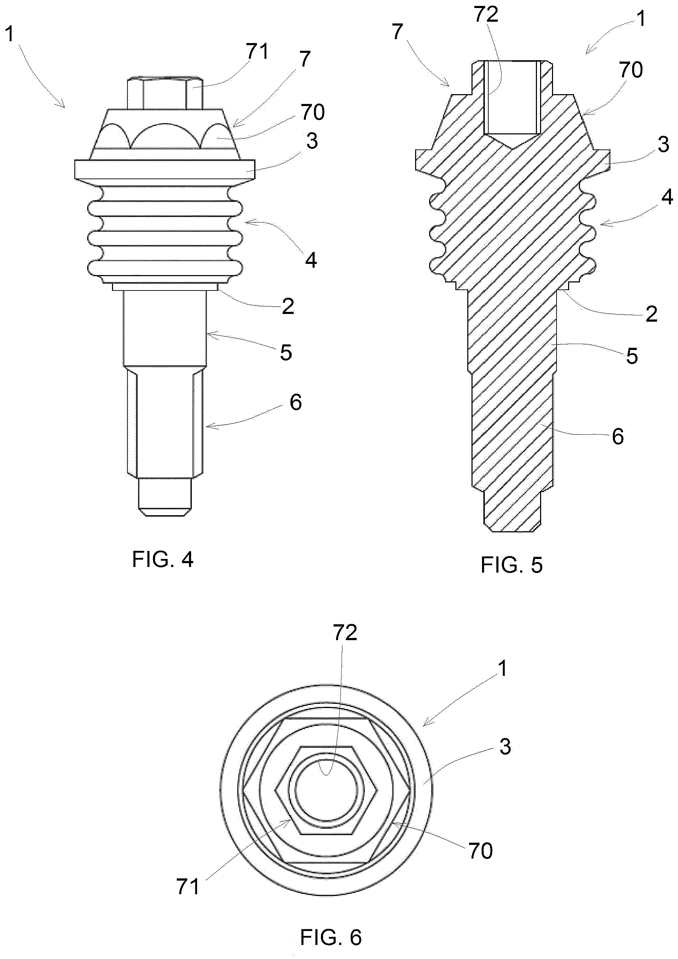

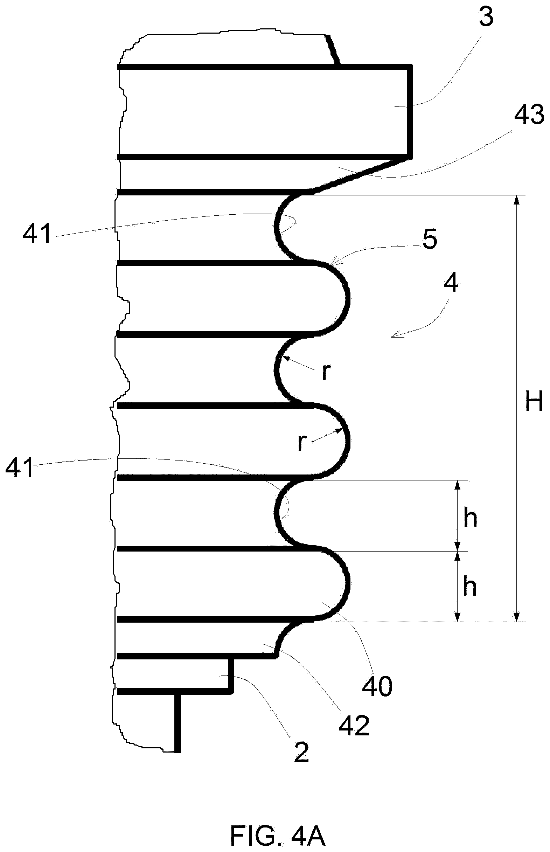

With reference to Figs. 4 to 16, the abutment according to the invention is disclosed, which is generally indicated with reference numeral (1).

With reference to Figs. 4-6, the abutment (1) comprises:

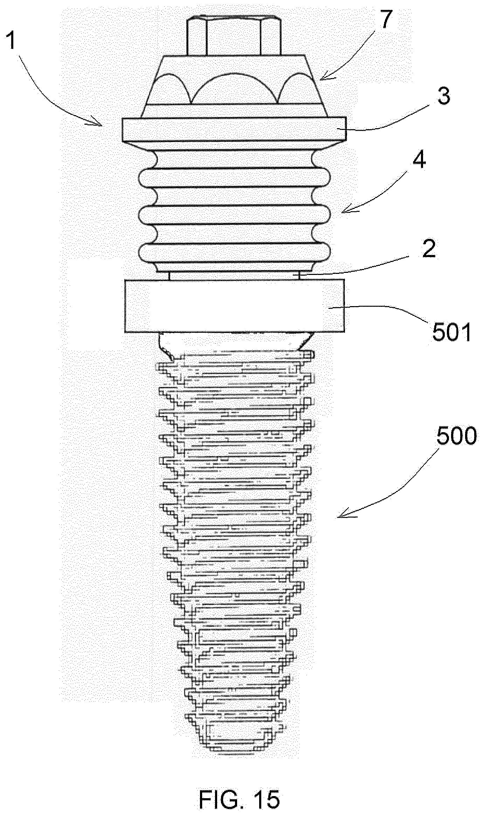

- a base (2) intended to be stopped against a platform (501) (Fig. 15) of an implant (500),
- a collar (3) intended to be stopped against a prosthesis,
- a body (4) disposed between the base (2) and the collar (3) and intended to come in contact with the transmucosal portion of the gingiva, in such a way to act as fastening surface for the transmucosal portion of the gingiva,

- a shank (5) that protrudes in lower position from the base (2) in order to be disposed inside the implant (500),
- a threaded stem (6) that protrudes in lower position from the shank (5) in order to be screwed inside the implant,
- a head (7) that protrudes in upper position from the collar (3) in order to anchor the prosthesis.

For illustrative purpose, the head (7) has a first portion (70) shaped as a hexagonal nut, and a second portion (71) shaped as a hexagonal nut obtained in the head (7). A threaded blind hole (72) is obtained in axial position in the head, being is open on top in order to receive a connection screw of the prosthesis.

With reference to Fig. 4A, the body (4) comprises a plurality of collar-shaped ribs (40) that are alternated with a plurality of grooves (41). The ribs (40) and the grooves (41) surround the body (4) of the abutment and have a semi-circular profile along a transverse plane orthogonal to the axis of the abutment. In view of the above, the alternation of a plurality of circular ribs (40) and circular grooves (41) guarantees a larger contact surface compared to an abutment with only two ribs and one groove.

Each circular rib (40) and each circular groove (41) have a semi-circular profile along an axial sectional plane. Experimental tests have shown that such a semi-circular profile of the circular ribs (40) and of the circular grooves (41) maximizes the contact surface between the abutment and the gingiva. In fact, if the depth of the circular groove is higher than the height of said circular groove, an excessive gap is created between the abutment and the gingiva, such that the gingiva does not adhere perfectly in the grooves of the abutment. On the contrary, if the depth of the circular groove is lower than the height of said circular groove, the contact surface between the abutment and the gingiva is reduced.

For illustrative purpose, the body (4) comprises three circular ribs (40) that are alternated with three circular grooves (41). Advantageously, the ribs and the grooves can be in a number higher than three or lower than three. A first tapered connective portion (42) connects the base (2) to a first circular rib (40) of the body. A second tapered connective portion (43) connects the collar (3) to a last circular rib (41) of the body.

The body (4) has a height (H) comprised between 2.3 - 2.7 mm, preferably 2.5 mm.

The circular ribs (40) and the circular grooves (41) have the same height (h). The profiles of the circular ribs (40) and of the circular grooves (41) have the same radius of curvature (r). In this case, the radius of curvature (r) of a rib or groove is equal to half of its height (h).

If the height (H) of the body is 2.5 mm, the height of each rib and each groove will be:

$$h = H/6 = 0.4166 \text{ mm}.$$

The radius of curvature of each rib and each groove is r = h/2 = 0.20833 mm.

The development of the body profile is

$$s = 6 * \pi r = 3.925 \text{ mm}.$$

Evidently, the development (s = 3.925) of the body profile is much higher than the height (H = 2.5 mm). Consequently, the surface of the body (4) in contact with the mucosa is larger compared to an abutment with only two ribs and one groove or to an abutment with ribs and grooves having a non-semi-circular profile.

In the embodiment of Figs. 4-5, the abutment (1) is made in one piece. However, the abutment (1) can be obtained by assembling multiple parts.

In the following description the parts that are identical or correspond to the parts described above are identified with the same numerals, omitting their detailed description.

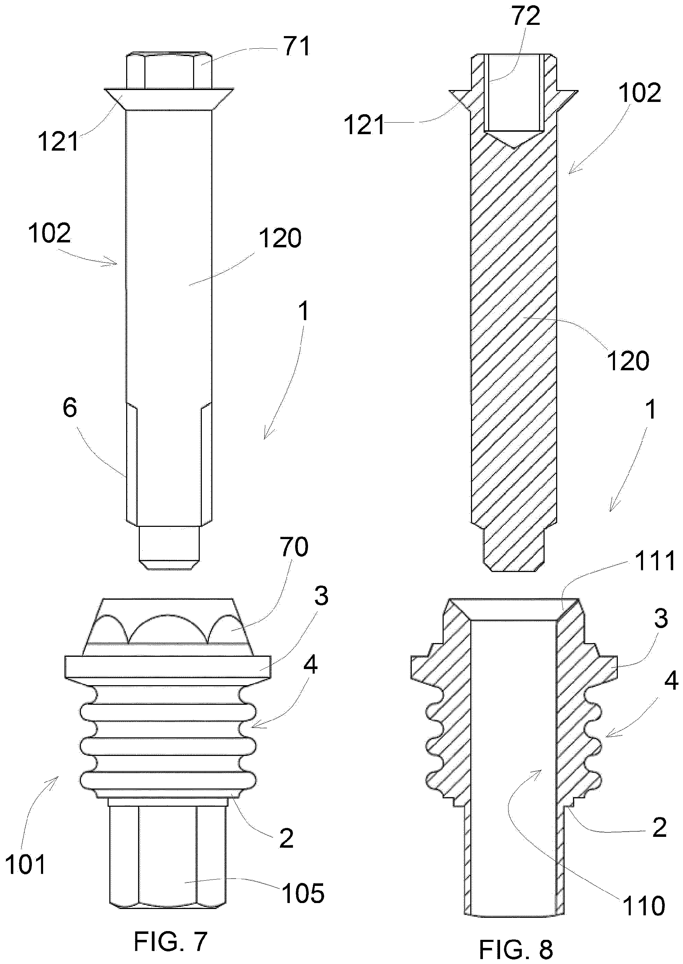

With reference to Figs. 7 and 8, a second embodiment of the abutment (1) is disclosed. In such a case, the abutment (1) comprises a first component (101) and a second component (102).

The first component (101) comprises the base (2), the body (4), the collar (3), the shank (105) under the base (2) and a first portion (70) of the hexagonal nut-shaped head. The shank (105) is shaped as a hexagonal nut. The first component (101) has a through axial hole (110) with a flared housing (111) at its upper end.

The second component (102) comprises a cylindrical body (120) with the threaded stem (6). The cylindrical body (120) has a tapered collar (121) in its upper part. A second portion (71) of the hexagonal nut-shaped head (7) is disposed above the tapered collar (121). The cylindrical body (120) of the second component is disposed in the axial hole (110) of the first component, in such a way that the tapered head (121) of the second component is coupled in the flared housing (111) of the first component. In view of the above, the threaded stem (6) protrudes in lower position from the first element in order to be screwed into the implant.

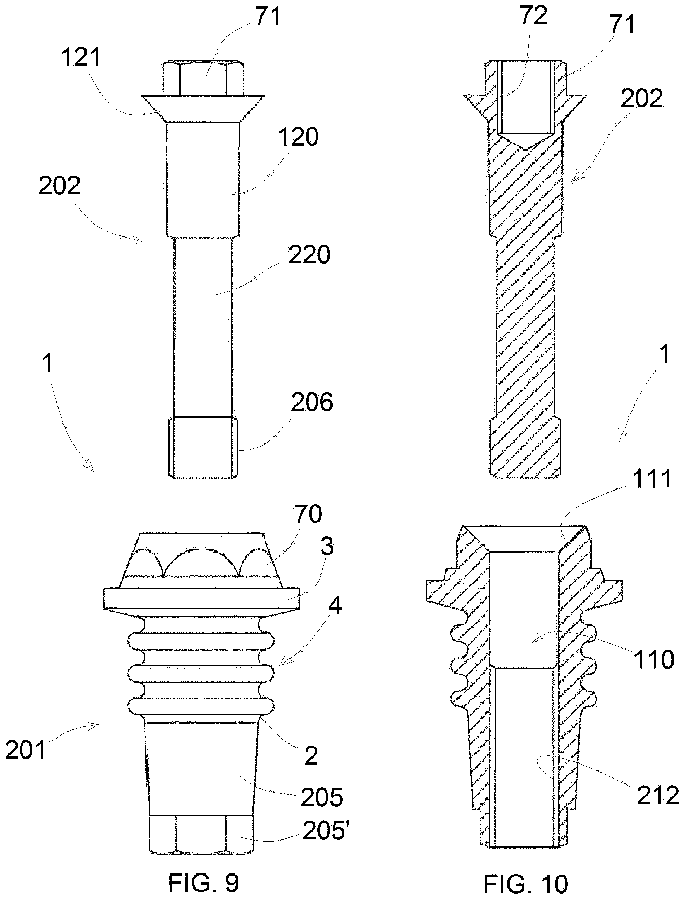

With reference to Figs. 9 and 10, a third embodiment of the abutment (1) is disclosed. In such a case, the abutment (1) comprises a first component (201) and a second component (202).

The first component (201) comprises the base (2), the body (4), the collar (3), the shank (205) under the base (2) and the first portion (70) of the hexagonal nut-shaped head. The shank (205) has a truncated-conical shape and ends with a portion (205') shaped as a hexagonal nut. The first component (201) has a through axial hole (110) with a flared housing (111) at its upper end. A threaded portion (212) is obtained in the axial through hole (110).

The second component (202) comprises a cylindrical body (120) provided with a stem (206) with a threaded end portion (206). The cylindrical body (120) has a tapered collar (121) in its upper part. The second portion (71) of the hexagonal nut-shaped head is disposed above the tapered collar (121). The cylindrical body (120) of the second component is disposed in the axial hole (110) of the first component, in such a way that the threaded end section (206) of the stem is screwed in the threaded section (212) of the axial hole of the first element, until the threaded end section (206) of the stem protrudes from the first component in order to be screwed in the implant and the tapered head (121) of the second element is coupled in the flared housing (111) of the first component.

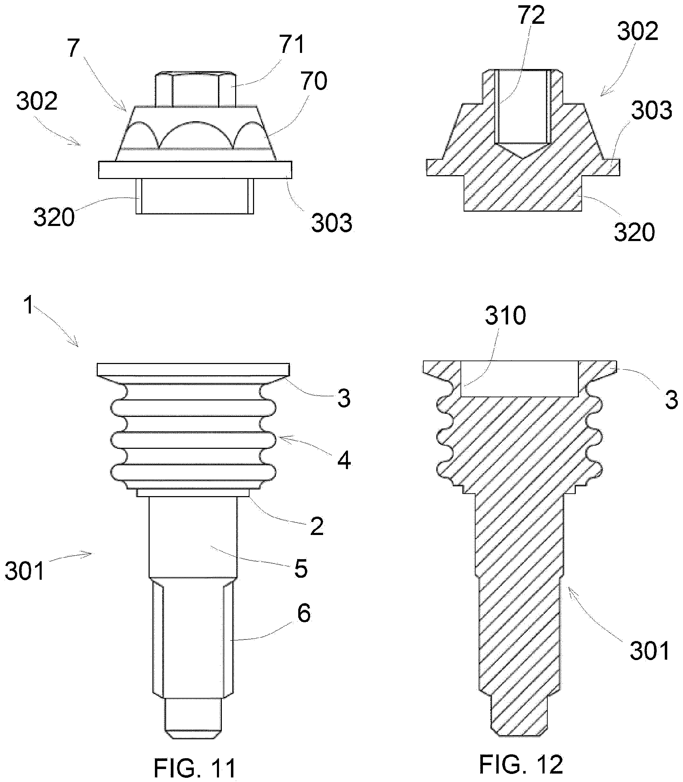

With reference to Figs. 11 and 12, a fourth embodiment of the abutment (1) is disclosed. In such a case, the abutment (1) comprises a first component (301) and a second component (302).

The first component (301) comprises the base (2), the body (4), the collar (3), the shank (5) under the base (2) and the threaded stem (6) under the shank (5). The first component (301) has a threaded blind hole (310) obtained in axial position in the collar (3) and having an opening obtained on an upper surface of the collar.

The second component (302) comprises:

- a collar (303) intended to be stopped against the collar (3) of the first component,
- the head (7) above the collar (303); and
- an externally threaded shank (320) that protrudes in lower position from the head (7) and intended to be screwed into the threaded blind hole (310) of the first component, in such a way that the head (7) is disposed above the collar (3) of the first component.

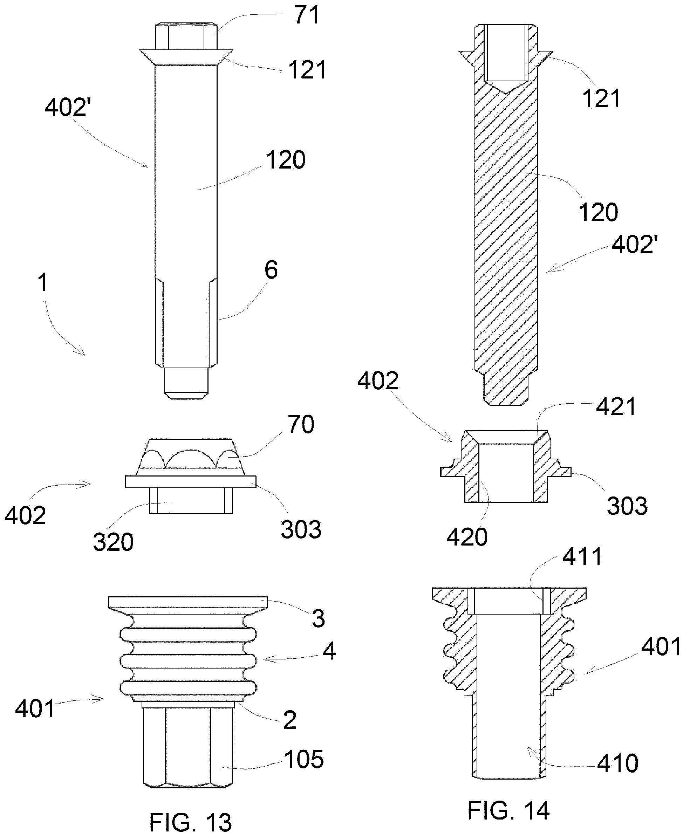

With reference to Figs. 13 and 14, a fifth embodiment of the abutment (1) is disclosed. In such a case, the abutment (1) comprises a first component (402), a second component (402) and a third component (402').

The first component (401) comprises the base (2), the body (4), the collar (3), the shank (105) under the base (2). The first component (401) has a through axial hole (410) with an upper threaded portion (411).

The second component (402) comprises:

- a collar (303) intended to be stopped against the collar (3) of the first component,
- the first portion (70) of the hexagonal nut-shaped head, disposed above the collar (303); and
- an externally threaded shank (320) intended to be screwed into the threaded portion (411) of the axial hole of the first component.

The second component (402) has an axial hole (420) that ends with a tapered housing (421) disposed in upper position.

The third component (402') is substantially identical to the second element (102) of the second embodiment of Figs. 7 and 8.

The cylindrical body (120) of the third component is disposed in the axial hole (420) of the second component and in the axial hole (410) of the first component until the tapered collar (121) of the third component is coupled in the flared housing (421) of the second component and the threaded stem (6) of the third component comes out under the first component in order to be screwed in the implant.

Fig. 15 shows an implant (500) shaped as a truncated-conical shank with external thread. The implant has a platform (501) against which the base (2) of the abutment (1) is stopped. In view of the above, the body (4) of the abutment (1) remains outside the implant (500).

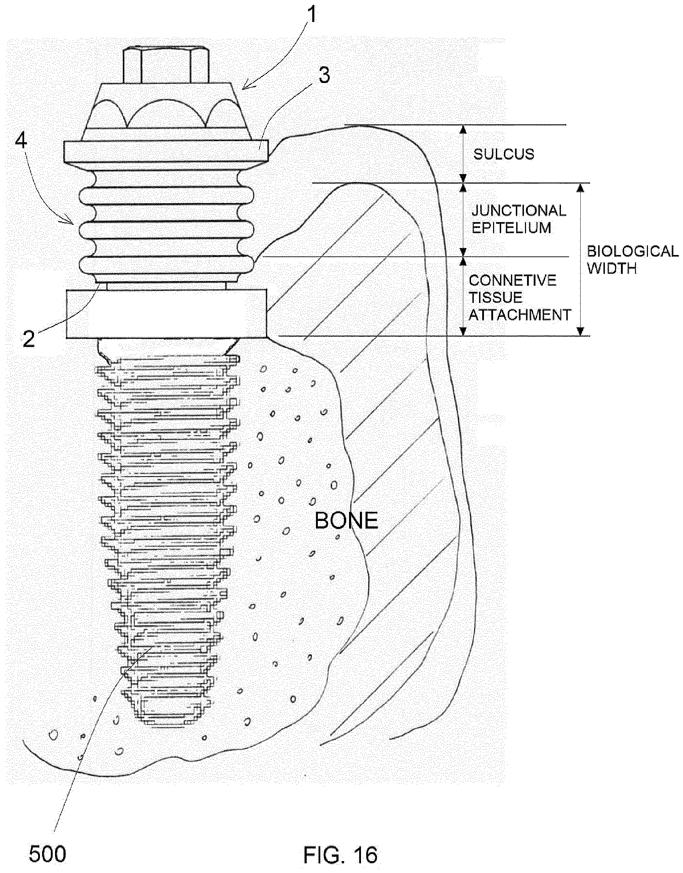

Fig. 16 shows the implant (500) screwed in the bone. The epithelial tissue is disposed above the connective tissue.

The distance between the most coronal level of the crestal bone and the most coronal level of the epithelium is the biological space. Such biological space is formed of the vertical dimension of the epithelium and of the junctional epithelium, approximately 2-2.5 mm, and of the vertical dimension of the connective tissue attachment, approximately 1-1.2 mm.. Therefore, the average height of the peri-implant biological space is 3-3.7 mm in good health conditions.

As shown in the figure, the shape and the dimensions of the body (4) of the abutment (1) guarantee a constant respect of the biological width.

Although not shown in the figures, the ribs of the body of the abutment according to the invention may be shaped as a non-circular collar.

**Claims**

1. Abutment (1) comprising:

   - a base (2) intended to be stopped against a platform (501) of an implant (500),
   - a collar (3) intended to be stopped against a prosthesis,
   - a body (4) disposed between the base (2) and the collar (3) and intended to come in contact with a transmucosal portion of the gingiva, in such a way to act as fixing surface for the transmucosal portion of the gingiva,
   - a shank (5) that protrudes in lower position from the base (2) in order to be disposed inside the implant (500),
   - a threaded stem (6) that protrudes in lower position from the shank (5) in order to be screwed inside the implant, and
   - a head (7) that protrudes in upper position from the collar (3) in order to permit the actuation of the abutment (1) and the anchoring of the prosthesis,

wherein said body (4) comprises a plurality of collar-shaped ribs (40) that are alternated with a plurality of grooves (41);
**characterized in that**
each rib (40) and each groove (41) have a semi-circular profile along an axial sectional plane.

2. The abutment (1) of claim 1, comprising at least three ribs (40) and at least three grooves (41).

3. The abutment (1) of claim 2, wherein said ribs (40) and said grooves (41) surround the body (4) of the abutment and have a semi-circular profile along a transverse plane orthogonal to the axis of the abutment.

4. The abutment (1) of any one of the preceding claims, wherein the ribs (40) and the grooves (41) have the same height (h).

5. The abutment (1) of any one of the preceding claims, wherein the profiles of the ribs (40) and of the grooves (41) have the same radius of curvature (r).

6. The abutment (1) of any one of the preceding claims, wherein the body (4) has a height (H) comprised between 2.3 mm and 2.7 mm.

7. The abutment (1) of any one of the preceding claims, comprising:

   - a first tapered connective portion (42) that connects the base (2) to a first circular rib (40) of the body and
   - a second tapered connective portion (43) that connects the collar (3) to a last circular rib (40) of the body.

8. The abutment (1) of any one of the preceding claims, wherein said abutment is made in one piece.

9. The abutment (1) of any one of claims 1 to 7, wherein said abutment comprises a first component (101) and a second component (102);
the first component (101) comprises the base (2), the body (4), the collar (3), the shank (105) under the base (2) and a first portion (70) of the hexagonal-nut shaped head; the first component (101) having a through axial hole (110) with a flared housing (111) at its upper end; and
the second component (102) comprises a cylindrical body (120) provided with the threaded stem (6) and a tapered collar (121) ending with a second portion (71) of the hexagonal nut-shaped head (7); the cylindrical body (120) of the second component being disposed in the axial hole (110) of the first component, in such manner that the tapered head (121) of the second component is coupled in the flared housing (111) of the first component.

10. The abutment (1) of any one of claims 1 to 7, wherein said abutment comprises a first component (201) and a second component (202);
the first component (201) comprises the base (2), the body (4), the collar (3), the shank (205) under the base (2) and a first portion (70) of the hexagonal nut-shaped head; the first component (201) having a through axial hole (110) with a flared housing (111) at its upper end and a threaded portion (212) obtained in the through axial hole (110);
the second component (202) comprises a cylindrical body (120) having a stem (220) with a threaded end section (206) and a tapered collar (121) ending in upper position with a second portion (71) of the hexagonal nut-shaped head; the cylindrical body (120) of the second component being disposed in the axial hole (110) of the first component, in such manner that the threaded end section (206) of the stem is screwed into the threaded portion (212) of the axial hole of the first component until the threaded end section (206) of the stem comes out of the first component and the tapered head (121) of the second component is coupled in the flared housing (111) of the first component.

11. The abutment (1) of any one of claims 1 to 7, wherein said abutment comprises a first component (301) and a second component (302);
the first component (301) comprises the base (2), the body (4), the collar (3), the shank (5) under the base (2) and the threaded stem (6) under the shank (5); said first component (301) being provided with a threaded blind hole (310) obtained in axial position in the collar (3) and provided with an opening obtained on an upper surface of the collar;
the second component (302) comprises:

   - a collar (303) intended to be stopped against the collar (3) of the first component,
   - the head (7) above the collar (303), and
   - an externally threaded shank (320) that protrudes in lower position from the head (7) and is intended to be screwed into the threaded blind hole (310) of the first component, in such a way that the head (7) is disposed above the collar (3) of the first component.

12. The abutment (1) of any one of claims 1 to 7, wherein said abutment comprises a first component (401) and a second component (402) and a third component (402');
the first component (401) comprises the base (2), the body (4), the collar (3), the shank (105) under the base (2); the first component (401) having a through axial hole (410) with a threaded upper portion (411);
the second component (402) comprises:

- a collar (303) intended to be stopped against the collar (3) of the first component,
- a first portion (70) of the hexagonal nut-shaped head, disposed above the collar (303); and
- an externally threaded shank (320) intended to be screwed into the threaded portion (411) of the axial hole of the first component;
- an axial hole (420) ending with a tapered housing (421) disposed in upper position;

the third component (402') comprises a cylindrical body (120) provided with the threaded stem (6) and a tapered collar (121) that ends in upper position with a second portion (71) of the hexagonal nut-shaped head;
the cylindrical body (120) of the third component being disposed in the axial hole (420) of the second component and in the axial hole (410) of the first component until the tapered collar (121) of the third component is coupled in the flared housing (421) of the second component and the threaded stem (6) of the third component comes out under the first component.

## Patentansprüche

1. Aufbaupfosten (1) umfassend:

   - eine Basis (2), die dazu bestimmt ist, gegen eine Plattform (501) eines Implantats (500) in Anschlag zu gehen,
   - einen Bund (3), der dazu bestimmt ist, gegen eine Prothese in Anschlag zu gehen,
   - einen Körper (4), der zwischen der Basis (2) und dem Bund (3) angeordnet und dazu bestimmt ist, mit einem transmukosalen Teil der Gingiva so in Kontakt zu kommen, dass er als Kopplungsfläche für den transmukosalen Teil der Gingiva dient,
   - einen Schaft (5), der aus der Unterseite der Basis (2) auskragt, um sich im Inneren des Implantats (500) anzuordnen,
   - einen Gewindezapfen (6), der aus der Unterseite des Schaftes (5) auskragt, um in das Implantat eingeschraubt zu werden, und
   - einen Kopf (7), der aus der Oberseite des Bundes (3) auskragt, um die Betätigung des Aufbaupfostens (1) und die Verankerung der Prothese zu ermöglichen,

   wobei der Körper (4) eine Vielzahl von Rippen (40) in Form von Bünden im Wechsel mit einer Vielzahl von Nuten (41) umfasst;
   **dadurch gekennzeichnet, dass**
   jede Rippe (40) und jede Nut (41) ein halbkreisförmiges Profil entlang einer axialen Schnittebene aufweist.

2. Aufbaupfosten (1) nach Anspruch 1, umfassend mindestens drei Rippen (40) und mindestens drei Nuten (41).

3. Aufbaupfosten (1) nach Anspruch 2, wobei die Rippen (40) und die Nuten (41) den Körper (4) des Aufbaupfostens umgeben und ein halbkreisförmiges Profil entlang einer Querebene orthogonal zur Achse des Aufbaupfostens aufweisen.

4. Aufbaupfosten (1) nach einem der vorstehenden Ansprüche, wobei die Rippen (40) und die Nuten (41) die gleiche Höhe (h) aufweisen.

5. Aufbaupfosten (1) nach einem der vorstehenden Ansprüche, wobei die Profile der Rippen (40) und der Nuten (41) den gleichen Krümmungsradius (r) aufweisen.

6. Aufbaupfosten (1) nach einem der vorstehenden Ansprüche, wobei der Körper (4) eine Höhe (H) zwischen 2,3 und 2,7 mm aufweist.

7. Aufbaupfosten (1) nach einem der vorstehenden Ansprüche, umfassend:

   - einen ersten sich verjüngenden Verbindungsabschnitt (42), der die Basis (2) mit einer ersten Rippe (40) des Körpers verbindet, und
   - einen zweiten sich verjüngenden Verbindungsabschnitt (43), der den Bund (3) mit einer letzten Nut (40) des Körpers verbindet.

8. Aufbaupfosten (1) nach einem der vorstehenden Ansprüche, wobei der Aufbaupfosten einstückig hergestellt ist.

9. Aufbaupfosten (1) nach einem der Ansprüche von 1 bis 7, wobei der Aufbaupfosten ein erstes Element (101) und ein zweites Element (102) umfasst;
   das erste Element (101) die Basis (2), den Körper (4), den Bund (3), den Schaft (105) unter der Basis (2) und einen ersten Abschnitt (70) des Kopfes (7) in Form einer Sechskantmutter umfasst; wobei das erste Element (101) ein axiales Durchgangsloch (110) mit einem konisch erweiterten Sitz (111) an seinem oberen Ende aufweist; und
   das zweite Element (102) einen zylindrischen Körper (120) mit dem Gewindezapfen (6) und einem sich verjüngenden Bund (121) umfasst, der in einem zweiten Abschnitt (71) des Kopfes (7) in Form einer Sechskantmutter endet; wobei der zylindrische Körper (120) des zweiten Elements in dem axialen Loch (110) des ersten Elements angeordnet ist, so dass der sich verjüngende Kopf (121) des zweiten Elements in dem konisch erweiterten Sitz (111) des ersten Elements gekoppelt ist.

10. Aufbaupfosten (1) nach einem der Ansprüche von 1 bis 7, wobei der Aufbaupfosten ein erstes Element (201) und ein zweites Element (202) umfasst; das erste Element (201) die Basis (2), den Körper (4), den Bund (3), den Schaft (205) unter der Basis (2) und einen ersten Abschnitt (70) des Kopfes in Form einer Sechskantmutter umfasst; wobei das erste Element (201) ein axiales Durchgangsloch (110) mit einem konisch erweiterten Sitz (111) an seinem oberen Ende und einen Gewindeabschnitt (212) aufweist, der in dem axialen Durchgangsloch (110) herausgearbeitet ist; das zweite Element (202) einen zylindrischen Körper (120) umfasst, der einen Zapfen (220) mit einem Gewindeendabschnitt (206) und einem sich verjüngenden Bund (121) aufweist, der oben in einem zweiten Abschnitt (71) des Kopfes in Form einer Sechskantmutter endet; wobei der zylindrische Körper (120) des zweiten Elements in dem axialen Loch (110) des ersten Elements angeordnet ist, so dass der Gewindeendabschnitt (206) des Zapfens in den Gewindeabschnitt (212) des axialen Loches des ersten Elements eingeschraubt ist, bis der Gewindeendabschnitt (206) des Zapfens aus dem ersten Element austritt und der sich verjüngende Kopf (121) des zweiten Elements in dem konisch erweiterten Sitz (111) des ersten Elements gekoppelt ist.

11. Aufbaupfosten (1) nach einem der Ansprüche von 1 bis 7, wobei der Aufbaupfosten ein erstes Element (301) und ein zweites Element (302) umfasst; das erste Element (301) die Basis (2), den Körper (4), den Bund (3), den Schaft (5) unter der Basis (2) und den Gewindezapfen (6) unter dem Schaft (5) umfasst; wobei das erste Element (301) ein Gewinde-Sackloch (310) aufweist, das axial in dem Bund (3) herausgearbeitet ist und eine Zugangsöffnung auf einer Oberseite des Bundes aufweist; das zweite Element (302) umfasst:

- einen Bund (303), der dazu bestimmt ist, gegen den Bund (3) des ersten Elements in Anschlag zu gehen,
- den Kopf (7) über dem Bund (303) und
- einen Außengewindeschaft (320), der aus der Unterseite des Kopfes (7) auskragt und dazu bestimmt ist, in das Gewinde-Sackloch (310) des ersten Elements eingeschraubt zu werden, so dass der Kopf (7) über dem Bund (3) des ersten Elements angeordnet ist.

12. Aufbaupfosten (1) nach einem der Ansprüche von 1 bis 7, wobei der Aufbaupfosten ein erstes Element (401), ein zweites Element (402) und ein drittes Element (402') umfasst; das erste Element (401) die Basis (2), den Körper (4), den Bund (3), den Schaft (105) unter der Basis (2) umfasst; wobei das erste Element (401) ein axiales Durchgangsloch (410) mit einem oberen Gewindeabschnitt (411) aufweist; das zweite Element (402) umfasst:

- einen Bund (303), der dazu bestimmt ist, gegen den Bund (3) des ersten Elements in Anschlag zu gehen;
- einen ersten Abschnitt (70) des Kopfes in Form einer Sechskantmutter, der über dem Bund (303) angeordnet ist; und
- einen Außengewindeschaft (320), der zum Einschrauben in den Gewindeabschnitt (411) des axialen Loches des ersten Elements bestimmt ist;
- ein axiales Loch (420), das in einem oben angeordneten, sich verjüngenden Sitz (421) endet;

das dritte Element (402') einen zylindrischen Körper (120) umfasst, der den Gewindezapfen (6) und einen sich verjüngenden Bund (121) aufweist, der oben in einem zweiten Abschnitt (71) des Kopfes in Form einer Sechskantmutter endet; wobei der zylindrische Körper (120) des dritten Elements in dem axialen Loch (420) des zweiten Elements und in dem axialen Loch (410) des ersten Elements angeordnet ist, bis der sich verjüngende Bund (121) des dritten Elements in dem konisch erweiterten Sitz (421) des zweiten Elements gekoppelt ist und der Gewindezapfen (6) des dritten Elements unter dem ersten Element austritt.

## Revendications

1. Pilier implantaire (1) comprenant :

- une base (2) destinée à aller en butée contre une plate-forme (501) d'un implant (500),
- un collier (3) destiné à aller en butée contre une prothèse,
- un corps (4) disposé entre la base (2) et le collier (3) et destiné à aller en contact avec une portion transmuqueuse de la gencive de manière à fonctionner en tant que surface d'accrochage pour la portion transmuqueuse de la gencive,
- une queue (5) qui fait saillie inférieurement de la base (2) pour se disposer dans l'implant (500),
- une tige filetée (6) qui fait saillie inférieurement de la queue (5) pour se visser dans l'implant, et
- une tête (7) qui fait saillie supérieurement du collier (3) pour permettre l'actionnement du pilier implantaire (1) et l'ancrage de la prothèse,

où ledit corps (4) comprend une pluralité de nervures (40) en forme de colliers alternés à une pluralité de rainures (41) ;

**caractérisé en ce que**

chaque nervure (40) et chaque rainure (41) présentent un profil à demi-circonférence, selon un plan de section axiale.

2. Pilier implantaire (1) selon la revendication 1, comprenant au moins trois nervures (40) et au moins trois rainures (41).

3. Pilier implantaire (1) selon la revendication 2, où lesdites nervures (40) et lesdites rainures (41) entourent le corps (4) du pilier implantaire et ont un profil en forme de demi-circonférence selon un plan transversal orthogonal à l'axe du pilier implantaire.

4. Pilier implantaire (1) selon l'une quelconque des revendications précédentes, où les nervures (40) et les rainures (41) ont la même hauteur (h).

5. Pilier implantaire (1) selon l'une quelconque des revendications précédentes, où les profils des nervures (40) et des rainures (41) ont le même rayon de courbure (r).

6. Pilier implantaire (1) selon l'une quelconque des revendications précédentes, où le corps (4) a une hauteur (H) comprise entre 2,3 - 2,7 mm.

7. Pilier implantaire (1) selon l'une quelconque des revendications précédentes, comprenant :

   - une première portion de raccord effilée (42) qui raccorde la base (2) à une première nervure (40) du corps et
   - une seconde portion de raccord effilée (43) qui raccorde le collier (3) à une dernière nervure (40) du corps.

8. Pilier implantaire (1) selon l'une quelconque des revendications précédentes, où ledit pilier implantaire est réalisé en une seule pièce.

9. Pilier implantaire (1) selon l'une quelconque des revendications de 1 à 7, où ledit pilier implantaire comprend un premier élément (101) et un second élément (102) ;
le premier élément (101) comprend la base (2), le corps (4), le collier (3), la queue (105) sous la base (2) et une première portion (70) de la tête (7) en forme d'écrou hexagonal ; le premier élément (101) ayant un orifice axial passant (110) ayant un emplacement évasé (111) à son extrémité supérieure ; et le second élément (102) comprend un corps cylindrique (120) ayant la tige filetée (6) et un collier conique (121) terminant par une seconde portion (71) de la tête (7) en forme d'écrou hexagonal ; le corps cylindrique (120) du second élément étant disposé dans l'orifice axial (110) du premier élément de manière que la tête effilée (121) du second élément s'accouple dans l'emplacement évasé (111) du premier élément.

10. Pilier implantaire (1) selon l'une quelconque des revendications de 1 à 7, où ledit pilier implantaire comprend un premier élément (201) et un second élément (202) ;
le premier élément (201) comprend la base (2), le corps (4), le collier (3), la queue (205) sous la base (2) et une première portion (70) de la tête en forme d'écrou hexagonal ; le premier élément (201) ayant un orifice axial passant (110) ayant un emplacement évasé (111) à son extrémité supérieure et une portion filetée (212) réalisée dans l'orifice axial passant (110) ;
le second élément (202) comprend un corps cylindrique (120) ayant une tige (220) avec une portion d'extrémité filetée (206) et un collier conique (121) terminant supérieurement par une seconde portion (71) de la tête en forme d'écrou hexagonal ; le corps cylindrique (120) du second élément étant disposé dans l'orifice axial (110) du premier élément de manière que la portion d'extrémité filetée (206) de la tige se visse dans la portion filetée (212) de l'orifice axial du premier élément, jusqu'à ce que la portion d'extrémité filetée (206) de la tige sorte du premier élément et la tête effilée (121) du second élément s'accouple dans l'emplacement évasé (111) du premier élément.

11. Pilier implantaire (1) selon l'une quelconque des revendications de 1 à 7, où ledit pilier implantaire comprend un premier élément (301) et un second élément (302) ;
le premier élément (301) comprend la base (2), le corps (4), le collier (3), la queue (5) sous la base (2) et la tige filetée (6) sous la queue (5) ; le premier élément (301) ayant un orifice borgne fileté (310) réalisé en position axiale dans le collier (3) et ayant une ouverture d'accès réalisée sur une surface supérieure du collier ;
le second élément (302) comprend :

   - un collier (303) destiné à aller en butée sur le collier (3) du premier élément,
   - la tête (7) au-dessus du collier (303), et
   - une queue filetée extérieurement (320) qui fait saillie inférieurement de la tête (7) et destinée à se visser dans l'orifice borgne fileté (310) du premier élément, de manière que la tête (7) soit disposée au-dessus du collier (3) du premier élément.

12. Pilier implantaire (1) selon l'une quelconque des revendications de 1 à 7, où ledit pilier implantaire comprend un premier élément (401), un deuxième élément (402) et un troisième élément (402') ;

le premier élément (401) comprend la base (2), le corps (4), le collier (3), la queue (105) sous la base (2) ; le premier élément (401) ayant un orifice axial passant (410) ayant une portion supérieure filetée (411) ;

le deuxième élément (402) comprend :

- un collier (303) destiné à aller en butée sur le collier (3) du premier élément ;
- une première portion (70) de la tête en forme d'écrou hexagonal, disposée au-dessus du collier (303) ; et
- une queue filetée extérieurement (320) destinée à se visser dans la portion filetée (411) de l'orifice axial du premier élément ;
- un orifice axial (420) terminant par un emplacement conique (421) disposé supérieurement ;

le troisième élément (402') comprend un corps cylindrique (120) ayant la tige filetée (6) et un collier conique (121) terminant supérieurement par une seconde portion (71) de la tête en forme d'écrou hexagonal ;

le corps cylindrique (120) du troisième élément étant disposé dans l'orifice axial (420) du deuxième élément et dans l'orifice axial (410) du premier élément, jusqu'à ce que le collier conique (121) du troisième élément s'accouple dans l'emplacement évasé (421) du deuxième élément et la tige filetée (6) du troisième élément sort en dessous du premier élément.

FIG. 1
PRIOR ART

prothesis

screw

Abutment

Implant or
Fixture

FIG. 2
PRIOR ART

ABUTMENT
BASE

CONNECTIVE
SLEEVE

IMPLANT
PLATFORM

FIG. 3
PRIOR ART

FIG. 4

FIG. 5

FIG. 6

FIG. 4A

FIG. 7

FIG. 8

FIG. 9

FIG. 10

FIG. 11

FIG. 12

FIG. 13

FIG. 14

FIG. 15

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010248187 A
- US 2011200969 A
- WO 2014090358 A
- EP 2486890 A